# EUROPÄISCHE PATENTSCHRIFT

(11) **EP 1 266 113 B1**
(45) Veröffentlichungstag und Bekanntmachung des Hinweises auf die Patenterteilung: **06.01.2010**
(21) Anmeldenummer: 01909590.0
(22) Anmeldetag: 10.01.2001
(51) Int. Cl.: E05C 9/20, B23P 21/00

(54) **KOPPELSTELLE IN FENSTER- ODER TÜRBESCHLAG**
CONNECTING POINT IN A WINDOW OR DOOR FITTING
EMPLACEMENT D'ACCOUPLEMENT POUR FERRURE DE FENETRE OU DE PORTE

(30) Priorität: 21.03.2000 DE 10013707
(43) Veröffentlichungstag der Anmeldung: 18.12.2002
(73) Patentinhaber: SIEGENIA-AUBI KG, 57234 Wilnsdorf (DE)
(72) Erfinder: LOOS, Horst, 57258 Freudenberg (DE)
(86) Internationale Anmeldenummer: PCT/EP2001/000183
(87) Internationale Veröffentlichungsnummer: WO 2001/071135

(56) Entgegenhaltungen:
- EP-A- 0 556 442
- EP-A- 0 605 782
- DE-A- 2 504 420
- DE-A- 2 548 140

## Beschreibung

Diese Erfindung bezieht sich auf ein Verfahren zum Montieren eines Fenster-oder Türbeschlages und auf einen entsprechend gestalteten Beschlag selbst. Der Einfachheit halber ist im folgenden nur noch von einem Fensterbeschlag die Rede, wobei jedoch Türbeschläge implizit mitzulesen sind.

Fensterbeschläge werden im allgemeinen in spezialisierten Betrieben als Sätze aus einer Anzahl Beschlagteile hergestellt und in Fensterbaubetrieben oder von Handwerkern auf der Baustelle an einem Fenster montiert. Dabei treten regelmäßig Situationen auf, in denen verschiedene Beschlagteile untereinander verkoppelt werden müssen, beispielsweise um Schub- oder Zugbewegungen zu übertragen. Es ist bekannt, dabei Verzahnungen an den miteinander zu verkoppelnden Beschlagteilen vorzusehen, die durch gegenseitigen Eingriff einen entsprechenden Form- und Kraftschluß sicherstellen.

In manchen Fällen ist es zudem erwünscht, bei einer solchen Verzahnung auch eine Anpassung einer Längendimension bei der Verkopplung vornehmen zu können. Dann können standardisierte Fensterbeschläge für verschiedene Fensterformate verwendet und individuell angepaßt werden. Üblich ist dies bei der Verkoppelung verschiedener Teile eines Treibstangengetriebes, das einen Teil eines vollständigen Fensterbeschlages bilden kann.

Aus den Dokumenten DE 25 04 420 A1, EP 556 442 A1 und EP 605 782 A1 sind Beschläge mit drei Beschlagteilen bekannt. Bei diesen bekannten Beschlägen sind zwei der Beschlagteile mittels Verzahnungen miteinander Koppelbar. Eines der verzahnten Beschlagteile ist an einem weiteren Beschlagteil verkippbar gehalten.

Neben den Herstellungskosten fallen in diesem technischen Gebiet zunehmend die Montagekosten ins Gewicht. Man ist daher allgemein bestrebt, die Montage solcher Beschläge zu vereinfachen und zu beschleunigen.

Der hier beschriebenen Erfindung liegt somit das technische Problem zugrunde, ein verbessertes Montageverfahren für einen Fenster- oder Türbeschlag und einen hinsichtlich der Montage verbesserten Fenster- oder Türbeschlag anzugeben. Die Erfindung richtet sich hierzu auf ein Verfahren zum Montieren eines Beschlages eines Fensters oder einer Tür, bei dem der Beschlag zwei miteinander in Eingriff zu bringende Verzahnungen an miteinander zu koppelnden erste und zweite Beschlagteilen aufweist, das erste der Beschlagteile an einem weiteren dritten Beschlagteil verkippbar gehalten ist, die zu verkoppelnden ersten und zweiten Beschlagteile, bei einer Annäherungsbewegung des zweiten Beschlagteils auf das erste und das dritte Beschlageteil zu, mit den Verzahnungen aufeinander zugeführt und dabei in Anlage gebracht werden und dann die Verzahnungen miteinander in Eingriff gebracht werden, wobei das erste Beschlagteil unabhängig von der Zuführbewegung am dritten Beschlagteil kippbar gehalten ist und durch die Anlage in eine für den Eingriff optimale Kippstellung zu dem zweiten Beschlagteil gekippt und somit selbsttätig ausgerichtet wird.

Daneben richtet sich die Erfindung auch auf einen Beschlag für ein Fenster oder eine Tür mit einem ersten, einem zweiten und einem dritten Beschlagteil, bei dem das erste an dem dritten Beschlagteile verkippbar gehalten ist und das erste und das zweite Beschlagteil, bei einer Annäherungsbewegung des zweiten Beschlagteils auf das erste und das dritte Beschlageteil zu, durch Eingriff jeweiliger Verzahnungen verkoppelbar sind und wobei der Beschlag dazu ausgelegt ist, daß wenn das erste und das zweite Beschlagteil auf einander zugeführt und in Anlage gebracht werden, das erste Beschlagteil unabhängig von der Zuführbewegung am dritten Beschlagteil kippbar ist und durch die Anlage in eine für den Eingriff optimale Kippstellung zu dem zweiten Beschlagteil gekippt und somit selbsttätig ausgerichtet wird.

Vorteilhafte Ausgestaltungen der Erfindung sind in den abhängigen Ansprüchen angegeben.

Der Erfindung liegt der Gedanke zugrunde, daß es bei der Beschlagmontage der eingangs beschriebenen Beschläge mit über Verzahnungen zu verkoppelnden Beschlagteilen auch wesentlich darauf ankommt, den Eingriff zwischen den Verzahnungen schnell, sicher und einfach herstellen zu können. Dabei wird davon ausgegangen, daß das Ineinandereinführen von Verzahnungen in der Praxis vor allem dann etwas umständlich ist, wenn die Verzahnungen nicht optimal zueinander stehen. Zum einen kann dies ihre relative Winkellage betreffen, zum anderen können bei einer leichten Fehlpositionierung z.B. Zahnvorsprünge aufeinander treffen anstelle auf auf der Gegenseite zugeordnete Zahnzwischenräume.

Bei der Erfindung ist vorgesehen, daß eines der miteinander zu verkoppelnden Beschlagteile, nämlich das hier als erstes Beschlagteil bezeichnete, kippbar an einem anderen dritten Beschlagteil gehalten ist. Diese Kippbarkeit ist so ausgelegt, daß sie unabhängig von einer Annäherungsbewegung zwischen den Beschlagteilen, nämlich dem ersten und dem zweiten Beschlagteil, bei der Montage und Verkopplung besteht. Dann kann sich das erste verkippbare Beschlagteil nach Herstellung der Anlage zwischen den Beschlagteilen selbsttätig ausrichten. Wenn es nämlich fehlpositioniert sein sollte, so wird durch Herstellung der Anlage und weiteres Aufeinanderzubewegen des ersten und des zweiten Beschlagteils infolge der Kippbarkeit selbsttätig eine Überführung des ersten Beschlagteils mittels einer Kippbewegung in eine optimale Kipposition bewirkt.

Bei dieser Kippbewegung in die für die Herstellung des Eingriffs optimale Kipposition kommt es zum einen jedenfalls zu einer Korrektur einer Fehlausrichtung des ersten und des zweiten Beschlagteils zueinander hinsichtlich ihrer relativen Winkelorientierung. Ferner ist diese Kippbewegung bei einer endlichen Größe des ersten Beschlagteils zwangsläufig mit gewissen translatorischen Bewegungsanteilen verbunden, so daß sich auch andere Fehlausrichtungen leicht überwinden lassen. Anschaulich gesprochen können während der Kippbewegung an geeigneter Stelle Zähne einer der Verzahnungen in die zugehörigen freien Räume der anderen Verzahnungen leicht einrasten und damit die richtige Positionierung selbsttätig vorgeben. Wesentlich hierbei ist, daß die Kippbarkeit des zweiten Beschlagteils unabhängig von der Zuführbewegung existiert und nicht etwa die Zuführbewegung lediglich in Form einer Kippbewegung realisiert wird. Damit würde kein zusätzlicher Freiheitsgrad erreicht.

Wie bereits eingangs angedeutet, richtet sich die Erfindung dabei bevorzugt auf die Verkopplung von Treibstangenbeschlagteilen, also insbesondere die Verkopplung von Treibstangenabschnitten untereinander durch eine lösbare und verstellbare Verzahnungskopplung. Auch bei sehr weitgehender Vormontage der Beschlagteile jeweils für sich müssen diese Kopplungen bei der Montage am Fenster vorgenommen werden, weil hierbei durch Auswahl geeigneter Treibstangenelemente und/oder durch Ausnutzung von Längeneinstellmechanismen eine Anpassung auf das tatsächliche Fensterformat vorgenommen wird. Insbesondere wird häufig die hier betrachtete Verzahnung als Feineinstellmöglichkeit verwendet, weil sich durch entsprechende Überlänge zumindest einer der Verzahnungen im Bereich dieser Längenausdehnung eine Vielzahl verschiedener Eingriffsmöglichkeiten bieten, die jeweils anderen Längenauslegungen des Gesamtbeschlages entsprechen.

Vorzugsweise ist bei dem erfindungsgemäßen Beschlag eine Federeinrichtung vorgesehen, die das erste Beschlagteil mit einer Federkraft beaufschlagt. Eine solche Feder kann beispielsweise eine zwischen dem ersten und dem dritten Beschlagteil vorgesehene Blattfeder sein, wie das Ausführungsbeispiel verdeutlicht. Günstig ist es dabei, wenn die durch die Federkraft vorgegebene Kippstellung, die das erste Beschlagteil relativ zu dem dritten Beschlagteil vor Herstellung des Eingriffs zwischen den Verzahnungen einnimmt, von der später nach Herstellung des Eingriffs eingenommenen optimalen Eingriffskippstellung abweicht. Damit wird zum einen erzwungen, daß es zu der oben beschriebenen Relativbewegung zwischen dem ersten und dem zweiten Beschlagteil kommt und somit eine Erleichterung der Ausrichtung der Zähne auf die Zahnzwischenräume ermöglicht wird. Zum zweiten ergibt sich daraus auch der Vorteil, daß die Federkraftbeaufschlagung auch nach Herstellung des Eingriffs weiter vorliegt und damit ein bei solchen Koppelstellen unvermeidliches Restspiel jedenfalls im Rahmen der Größe der wirksamen Federkraft beseitigt. Damit verbessern sich die Gebrauchseigenschaften des Gesamtbeschlages spürbar.

An dieser Stelle ist einzufügen, daß die Wirkungen der Erfindung auch noch in folgender indirekter Weise eintreten können: durch die erfindungsgemäße Erleichterung der Verkopplung der verzahnten Beschlagteile ist es möglich, größere Zahnteilungen zu verwenden und dabei dennoch eine leichte Herstellbarkeit des Verzahnungseingriffs beizubehalten. Durch größere Zahnteilungen sind jedoch deutlich größere Kräfte über die Koppelstelle übertragbar, was aus verschiedenen anderen Gründen von Interesse sein kann, insbesondere aber auch die Belastbarkeit und damit die Lebensdauer der Koppelstelle selbst verbessert. Darüber hinaus können die Spielmaße zwischen den Verzahnungen bei größeren und auch bei kleineren Zahnteilungen bei Bedarf auch noch etwas vergrößert werden, um die Herstellbarkeit des Eingriffs noch weiter zu optimieren. Durch die Federkraftbeaufschlagung tritt das daraus resultierende Spiel bei ausreichend großer Federkraft nicht störend auf.

Vorzugsweise sind die Verzahnungen an bezüglich der Bewegungsrichtung bei der Herstellung des Eingriffs seitlichen Flächen des ersten und des zweiten Beschlagteils vorgesehen. Dabei sollten die durch die Zähne und Zahnzwischenräume gebildeten Linien im wesentlichen der Richtung des Aufeinanderzubewegens der Beschlagteile bei der Montage entsprechen, so daß die Bewegungsrichtung nach Herstellung der Anlage nicht mehr verändert werden muß.

Das Ausführungsbeispiel betrifft dabei einen klauenartigen Zahnschuh, der kippbar an einem Treibstangenabschnitt gehalten ist, und ein komplementäres Treibstangenstück. Der Zahnschuh ist innen verzahnt und umgreift mit seiner Verzahnung eine Außenverzahnung der Stange. Natürlich ist auch ein anderer Fall denkbar, etwa ein innenverzahntes Fangloch in einem Treibstangenabschnitt und ein außenverzahnter Zahnschuh. Beide Fälle haben in verschiedenen Anwendungsmöglichkeiten ihre spezifischen Vorteile.

Hinsichtlich der kippbaren Halterung des ersten Beschlagteils an dem dritten sind natürlich die in der Technik bekannten Gelenkverbindungen über Drehachsstifte und dergleichen möglich. Eine besonders einfache Ausführungsform zeigt das Ausführungsbeispiel, in dem eine Zapfen- Loch-Verbindung mit ungefähr senkrecht zur Kippachse liegender Zapfenachse gewählt wurde. Dem liegt die Überlegung zugrunde, daß die Kippbarkeit bei dieser Erfindung keiner präzise geführten Bewegung entsprechen muß und es hinsichtlich der Führung ausreicht, wenn das erste Beschlagteil gegenüber dem dritten Beschlagteil im fertig verkoppelten Zustand so festgelegt ist, daß kein unnötiges Spiel auftritt.

Vorzugsweise werden hierbei zwei Zapfen- Loch-Verbindungen verwendet, wobei der in beiden Fällen vorgesehene Anschlag - zur Verhinderung eines Verlustes des ersten Beschlagteiles durch Herausfallen aus den Löchern - bei den beiden Verbindungen unterschiedlich ausgeführt ist. Dadurch kann einer der Zapfen weniger weit aus dem ihm zugeordneten Loch heraustreten als der andere. Zusammen mit der beschriebenen Feder läßt sich so erreichen, daß das erste Beschlagteil in der erwähnten Ruhestellung vor Herstellung des Eingriffs gegenüber der erwähnten optimalen Ausrichtung verkippt liegt. Dies wird im Ausführungsbeispiel näher veranschaulicht.

Eine konkrete Möglichkeit zur Ausführung dieser Anschläge besteht darin, daß die Löcher bei den Zapfen- Loch-Verbindungen eine sich verjüngende Form aufweisen und die Zapfen eine komplementäre Form, entweder eine sich allmählich verjüngende Form oder eine eher lokalisierte Kopfverbreiterung. Dann wird die Zapfenform bzw. der verbreiterte Zapfenkopf in einer bestimmten Höhe des Lochs aufgehalten und kann nicht vollständig durch das Loch hindurchtreten.

Eine besonders einfache technische Realisierungsmöglichkeit besteht darin, daß die Löcher in einem einfachen Blechteil ausgestanzt werden, wobei die Seite, in die das Stanzwerkzeug eintritt, die gegenüber der entgegengesetzten Seite etwas kleiner bemessene Öffnung erhält.

Die komplementären Zapfen können ebenfalls an einem Stanzteil vorgesehen sein, etwa als Hohlzapfen, oder auch durch Zinkdruckguß hergestellt werden. In beiden Fällen kann die Kopfverbreiterung z.B. nach Einführen des ersten Beschlagteils mit seinen Zapfen in die Löcher durch einen Schlag auf die Zapfen erfolgen, der deren Form im Distalbereich etwas verbreitert. Auch eine leichte Verbreiterung durch ein Taumelwerkzeug ist denkbar.

Um die Bauhöhe des Beschlages zu minimieren ist es in all diesen Fällen bevorzugt, daß das erste Beschlagteil in verkoppeltem Zustand, also bei fertig montiertem Beschlag, möglichst nah an dem dritten Beschlagteil anliegt, also die Zapfen von dem durch die Justagefunktion der Erfindung bedingten Restspiel abgesehen möglichst vollständig in den jeweiligen Löchern liegen.

Ein besonders vorteilhafter Aspekt der Erfindung besteht darin, daß die Erleichterung des Kopplungsvorgangs zwischen dem ersten und dem zweiten Beschlagteil, bzw. wenn man das zweite Beschlagteil als Hilfsmittel für die Kopplung betrachtet, zwischen dem zweiten und dritten Beschlagteil, maschinell durchgeführt werden kann. Dabei ist man mit konventionellen Lösungen immer wieder auf Schwierigkeiten gestoßen, weil Automaten nicht zu einer ausreichend sensiblen Herstellung des Eingriffs zwischen Verzahnungen in der Lage sind. Es haben sich vielmehr immer wieder Ausfälle und Beschädigungen ergeben, indem zwischen den Verzahnungen Fehljustagen und Verklemmungen aufgetreten sind. Einem Montageautomaten fehlt gewissermaßen das "Fingerspitzengefühl", daß es einem menschlichen Monteur ermöglicht, unter Zuhilfenahme seines Tastsinns eine "gefühlvolle" und damit schonende und erfolgreiche Verkopplung solcher Beschlagteile vorzunehmen.

Die vorstehende Beschreibung und die folgende Erläuterung des Ausführungsbeispiels beziehen sich sowohl auf den Verfahrensaspekt als auch auf den Vorrichtungsaspekt der Erfindung. Dies wird nicht bei allen Einzelmerkmalen explizit ausgeführt; die Offenbarung ist jedenfalls so zu verstehen, daß sie sich formal an jeder Stelle auf Verfahrensmerkmale und Vorrichtungsmerkmale bezieht.

Ferner können die bei dem folgenden Ausführungsbeispiel erläuterten Einzelmerkmale auch in anderen als in dargestellten Kombinationen erfindungswesentlich sein.
Fig. 1 zeigt eine teils im Schnitt dargestellte Aufrißansicht des wesentlichen Abschnitts eines erfindungsgemäßen Beschlages;
Fig. 2 zeigt eine Draufsicht auf einen Teil der in Fig. 1 dargestellten Elemente, nämlich auf das erste und das dritte Beschlagteil;
Fig. 3a zeigt eine im wesentlichen Fig. 1 entsprechende Aufrißdarstellung, wobei jedoch bereits eine Anlage zwischen dem ersten und einem zweiten Beschlagteil hergestellt ist;
Fig. 3b zeigt eine Schnittansicht durch die in Fig. 3a dargestellte Situation, wobei schematisch eine Fensternut skizziert ist;
Fig. 4 entspricht weitgehend den Figuren 1 und 3a, zeigt jedoch die vollständig hergestellte Verkopplung zwischen den Beschlagteilen.

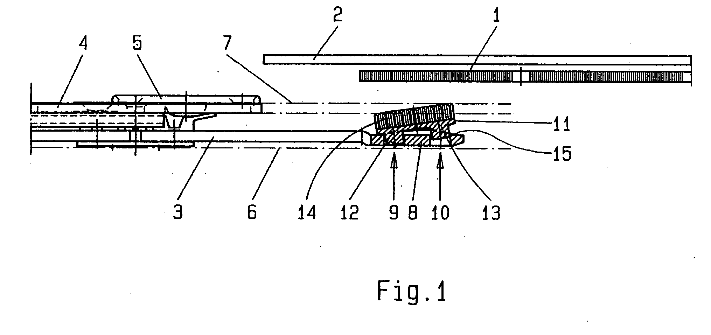

In Fig. 1 erkennt man einen außen gezahnten Endabschnitt 1 eines Treibstangenelements als zweites Beschlagteil im Sinn der Erfindung. Darüber ist schematisch ein Stulpschienenabschnitt 2 zur Abdeckung des montierten Beschlags in einer Fenster- oder Türnut angedeutet.

Im linken unteren Bereich der Fig. 1 erkennt man einen weiteren, bis auf den Distalabschnitt (rechts) konventionellen Treibstangenabschnitt 3 als drittes Beschlagteil im Sinn der Erfindung, wobei die im linken Bereich dargestellten Einzelheiten des dritten Beschlagteils 3 einen weiteren Stulpschienenabschnitt 4, einen daraufliegenden Montageschieber 5 und weitere Einzelheiten umfassen, die für die Erfindung nicht von Bedeutung sind. Die im mittleren und rechten Bereich der Figur dargestellten strichpunktierten Bezugslinien 6 und 7 bezeichnen einerseits die spätere Lage des Bodens einer Montagenut 6 bzw. die für den Stulpschienenabschnitt 2 fertig montierten Zustand angestrebte Lage 7.

Der mittlere Abschnitt der Fig. 1 zeigt an einem in der Fig. rechten Distalende des dritten Beschlagteils 3, nämlich des linken Treibstangenabschnitts, einen leicht nach unten abgekröpften Distalabschnitt 8, der im Schnitt dargestellt ist, und der zwei in Bewegungsrichtung der Treibstangen (in der Fig. 1 horizontal) hintereinander liegende Löcher 9 und 10 enthält. In den Löchern 9 und 10 ist ein im unteren Bereich ebenfalls im Schnitt dargestellter Zahnschuh 11 gefangen, und zwar mit zwei Zapfen 12 und 13. Dazu weisen die Zapfen 12 und 13 von einer ebenen Bodenplatte des Zahnschuhs 11 nach unten auf die Löcher 9 und 10 und den Nutboden 6 zu.

Von der ebenen Basisplatte des Zahnschuhs 11 aus erstreckt sich ein klauenartiger Abschnitt 14 mit einer zu der Außenverzahnung des Treibstangenabschnitts 1 komplementären Innenverzahnung nach oben, also zur Stulpschiene 2 hin.

Insgesamt bildet der Zahnschuh 11 mit den Zapfen 12 und 13 sowie dem innenverzahnten klauenartigen Abschnitt 14 das erste Beschlagteil in der Begriffswähl der Erfindung.

In Fig. 1 erkennt man ferner, daß zwischen das erste Beschlagteil 11 und den Distalabschnitt 8 des Treibstangenabschnitts 3 eine sich nach oben konvex wölbende Blattfeder 15 zwischengelegt ist, deren beide Enden jeweils außerhalb der Löcher 9 und 10 auf dem Distalabschnitt 8 verankert sind. Dazu ist die Blattfeder an den beiden Enden geschlitzt ausgeführt, so daß Sie die Zapfen 12 und13 jeweils vor und hinter der Zeichenebene der Fig. 1 umfaßt. Dadurch ist die Blattfeder 15 zwischen dem ersten Beschlagteil 11 und dem Distalabschnitt 8 des dritten Beschlagteils gefangen.

Das erste Beschlagteil 11 ist mit seinen Zapfen 12 und 13 in den Löchern 9 und 10 des Distalabschnitts 8 des dritten Beschlagteils 3 dadurch verankert, daß die Löcher 9 und 10 eine in Fig. 1 leicht angedeutete konische Form aufweisen, die sich im Sinn der Figur nach oben verjüngt. Diese Form entsteht einfach dadurch, daß die Löcher 9 und 10 in dem Blechteil 3 durch Ausstanzen hergestellt worden sind, wobei das Stanzwerkzeug im Sinn der Fig. 1 von oben eingetreten und den ausgestanzten Teil nach unten herausgedrückt hat.

Zusätzlich weisen die beiden Zapfen 12 und 13 jeweils eine Kopfverdickung auf, die in Fig. 1 nicht näher dargestellt ist, jedoch die Zapfen in der konischen Form der Löcher 9 und 10 fängt. Dabei wird der in der Figur linke Zapfen 12 in einer tieferen Position gefangen als der rechte Zapfen 13. Dies kann dadurch geschehen, daß das Maß des Lochs 9 etwas geringer bemessen ist als das des Lochs 10. Natürlich wäre es auch möglich, daß die Zapfen oder die Kopfverbreiterungen der Zapfen entsprechend unterschiedlich ausgelegt sind.

Wie sich bei der folgenden Beschreibung noch anschaulicher darstellen wird, dient diese Unterscheidung zwischen den Zapfen 12 und 13 dazu, den Zapfen 12 in dem Loch 9 gewissermaßen als Kippachse und den Zapfen 13 in dem Loch 10 als Führung der zugehörigen Kippbewegung des ersten Beschlagteils 11 wirken zu lassen.

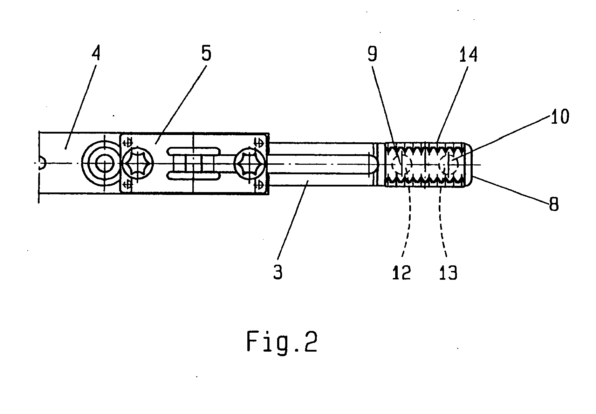

Fig. 2 zeigt eine Draufsicht auf das erste und das dritte Beschlagteil aus Fig. 1, wobei die Stulpschiene 2 und das zweite Beschlagteil 1 weggelassen sind. Man erkennt im rechten Bereich die Innenverzahnung des klauenartigen Abschnitts 14 des ersten Beschlagteils 11 und gestrichelt angedeutet die Positionen der Zapfen 12 und 13 sowie der Löcher 9 und 10 darunter. Ferner erkennt man die mit Ausnahme des Distalabschnitts 8 mittig längsgeschlitzte Form des dritten Beschlagteils 3, nämlich des linken Treibstangenabschnitts, die zur Führung dieses Treibstangenabschnitts bei einer Betätigungsbewegung des Treibstangenbeschlages und zum Durchtritt von Befestigungsschrauben dient. Im linken Bereich der Fig. 2 ist die Stulpschiene 4 mit einer Befestigungsschraubenöffnung zu erkennen sowie etwas rechts davon der in Fig. 1 bereits dargestellte Montageschieber 5 mit weiteren zwei Montagelöchern.

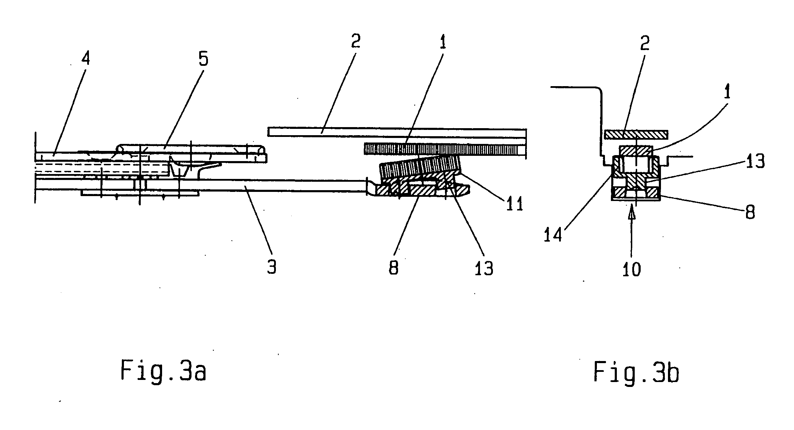

Fig. 3a entspricht weitgehend der Darstellung aus Fig. 1, wobei jedoch die Baueinheit aus dem zweiten Beschlagteil 1, nämlich dem rechten Treibstangenabschnitt, und dem Stulpschienenabschnitt 2 soweit abgesenkt ist, daß der im Sinn der Fig. 3a oberste Bereich des ersten Beschlagteils 11 bereits in Anlage zu dem zweiten Beschlagteil 1 steht. Dies erfolgt wegen der tieferen Halterung des in Fig. 1 linken Zapfens 12 in dem Loch 9 im Vergleich zu dem Zapfen 13 in dem Loch 10 am rechten oberen Ende des Zahnschuhs 11.

In Fig. 3b ist die gleiche Situation in einem Längsschnitt quer zur Bewegungsrichtung des Treibstangenbeschlags dargestellt. Die Schnittebene läuft dabei durch den in Fig. 3a rechten Bereich des rechten Zapfens 13 und erfaßt somit im wesentlichen die Stelle der Anlage zwischen dem ersten Beschlagteil 11 und dem zweiten Beschlagteil 1. Man erkennt hier die komplementäre Formgestaltung des klauenartigen Abschnitts 14 des ersten Beschlagteils 11 im Vergleich zu der Auslegung des außenverzahnten Treibstangenabschnitts 1. Der Boden der in Fig. 3b dargestellten Nut entspricht dabei dem in Fig. 1 mit 6 bezeichneten Niveau.

Ferner ist in Fig. 3b schematisch die entsprechende Montagenut in einem Fensterrahmen angedeutet, die, weil sie konventionell ist, nicht weiter erläutert werden soll. Immerhin ist zu sehen, daß für die Aufnahme der den Beschlag im fertig montierten Zustand vollständig abdeckenden Stulpschiene 2 ein entsprechend verbreiterter oberer Nutabschnitt vorgesehen ist.

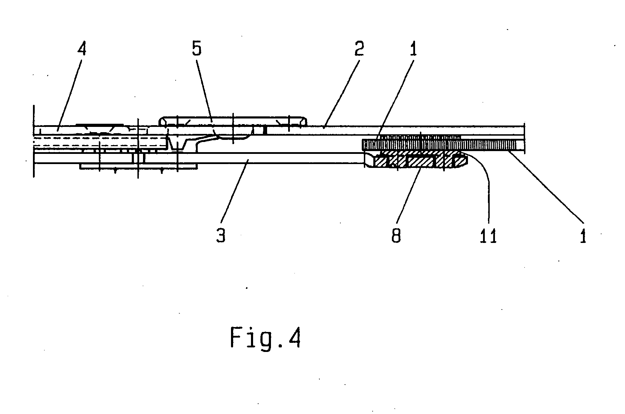

Schließlich zeigt Fig. 4 eine den Figuren 1 und 3a entsprechende Darstellung, wobei jedoch aus der Anlagesituation aus Fig. 3a eine vollständige Verkopplung hergestellt wurde. Es ist anschaulich, daß dies durch Herabdrücken der Baueinheit aus der Stulpschiene 2 und dem zweiten Beschlagteil 1 auf die übrigen, bereits in der in Fig. 3b dargestellten Nut untergebrachten Teile erfolgt. Dabei wird durch das Herabdrücken der Zahnschuh 11 als erstes Beschlagteil gegen die Kraft der Feder 15 auf seiner rechten Seite gewissermaßen um die Verbindung zwischen Zapfen 12 und Loch 9 als Kippachse schwenkend herabgedrückt, bis sich eine winkelmäßig optimale Ausrichtung zwischen der Innenverzahnung des Klauenabschnitts 14 und der Außenverzahnung des Treibstangenabschnitts 1 ergibt. Außerdem ist anschaulich, daß der obere rechte Bereich (in Fig. 3a) des Zahnschuhs 11 dabei auch in horizontaler Richtung etwas relativ zu dem Treibstangenabschnitt 1 bewegt wird, so daß, wenn die Winkelorientierung dafür geeignet ist, ein Ineinandereingreifen der Verzahnung bei entsprechender Passung zwischen Zähnen und Zahnzwischenräumen selbsttägig erfolgen kann. Bei weiterem Herabdrücken rutscht der Treibstangenabschnitt 1 dann vollständig in den Klauenabschnitt 14 hinab, wobei der Zapfen 13 praktisch vollständig in das Loch 10 hinabgedrückt wird, so daß sich insgesamt eine den Abmessungen der in Fig. 3d angepaßte kompakte Konfiguration ergibt. Dies ist in Fig. 4 erkennbar.

Weiterhin zeigt Fig. 4, daß der anhand der Fig. 1 bereits erwähnte Montageschieber 5 über den Stulpschienenabschnitt 2 etwas nach rechts verschoben wurde, so daß sein linkes Montageloch entsprechend mit einem Montageloch in dem darunterliegenden Stulpschienenabschnitt 4 fluchtet und der Stulpschienenabschnitt 2 in der in Fig. 1 mit 7 angedeuteten Lage fixiert werden kann.

Dieser komplette Bewegungsablauf (von Fig. 1 über Fig. 3a zu Fig. 4) kann ohne weiteres mit einem Montageautomaten erfolgen, weil die erfindungsgemäße Konstruktion des Distalendes 8 des Treibstangenabschnitts 3 mit dem Zahnschuh 11 für eine selbsttägige Ausrichtung und schonende Einpassung und Verkopplung der Verzahnungen sorgt. Damit ist ein wesentliches Hindernis auf dem Weg zu einer vollautomatischen Montage solcher Fenster- oder Türbeschläge beseitigt.

## Patentansprüche

1. Verfahren zum Montieren eines Beschlages eines Fensters oder einer Tür, bei dem
der Beschlag zwei miteinander in Eingriff zu bringende Verzahnungen an miteinander zu koppeln erste und zweite Beschlagteilen (11,1) aufweist, das erste der Beschlagteile (11) an einem weiteren dritten Beschlagteil (3) verkippbar gehalten ist,
die zu verkoppelnden ersten und zweiten Beschlagteile (11,1), bei einer Annäherungsbewegung des zweiten Beschlagteils (1) auf das erste (11) und das dritte (3) Beschlagteil zu, mit den Verzahnungen aufeinander zugeführt und dabei in Anlage gebracht werden und dann die Verzahnungen miteinander in Eingriff gebracht werden,
wobei das erste Beschlagteil (11) unabhängig von der Zuführbewegung am dritten Beschlagteil (3) kippbar gehalten ist und durch die Anlage in eine für den Eingriff optimale Kippstellung zu dem zweiten Beschlagteil (1) gekippt und somit selbsttätig ausgerichtet wird.

2. Verfahren nach Anspruch 1,
bei dem das erste, das zweite und das dritte Beschlagteil (11,1,3) Bestandteil eines Treibstangenbeschlages sind und gemeinsam eine lösbare und verstellbare Treibstangenkupplung bilden.

3. Verfahren nach Anspruch 1 oder 2,
bei dem das erste Beschlagteil (11) in seiner Kippbarkeit federkraftbeaufschlagt ist, wobei die durch die Federkraft vorgegebene Ruhekippstellung des ersten Beschlagteils (11) vor der Herstellung des Eingriffs von der für den Eingriff optimalen Kippstellung abweicht.

4. Verfahren nach Anspruch 3, bei dem zwischen dem ersten und dem dritten Beschlagteil (11,3) eine Blattfeder (15) vorgesehen ist, die das erste Beschlagteil (11) von dem dritten Beschlagteil (3) wegdrückt.

5. Verfahren nach einem der vorstehenden Ansprüche, bei dem die Verzahnung an Seitenflächen des ersten und des zweiten Beschlagteils (11,1) ausgebildet sind, die im wesentlichen parallel zu der Richtung der Zuführbewegung liegen, und Zahnvorsprünge und Zwischenzahnausnehmungen aufweisen, die ebenfalls im wesentlichen parallel zu der Richtung der Zuführbewegung liegen.

6. Verfahren nach einem der vorstehenden Ansprüche, bei dem das erste Beschlagteil (11) ein klauenartiger innenverzahnter Zahnschuh und das zweite Beschlagteil (1) eine außenverzahnte Stange ist.

7. Verfahren nach einem der vorstehenden Ansprüche, bei dem die kippbare Halterung zwischen dem ersten und dem dritten Beschlagteil (11,3) durch eine Zapfen-Loch-Verbindung (9,10,12,13) mit einem Anschlag erfolgt.

8. Verfahren nach Anspruch 3 und 7, bei dem zwei Zapfen- Loch-Verbindungen (9,10,12,13) vorgesehen sind und ein Anschlag der einen (9,12) den betreffenden Zapfen (12) tiefer in dem betreffenden Loch (9) hält als ein Anschlag den anderen (13) in dem anderen Loch (10).

9. Verfahren nach Anspruch 7 oder 8, bei dem das oder die Löcher (9,10) eine sich verjüngende Form und der oder die Zapfen (12,13) eine sich komplementär verjüngende Form oder eine Kopfverbreiterung aufweisen.

10. Verfahren nach Anspruch 8 oder 9, bei dem nach Herstellung des Eingriffs die Zapfen (12,13) im wesentlichen vollständig in den jeweiligen Löchern (9,10) liegen.

11. Verfahren nach einem der vorstehenden Ansprüche, bei dem die Zuführ- und die Eingriffsherstellungsbewegung durch einen Montageautomaten maschinell erzeugt werden.

12. Beschlag für ein Fenster oder eine Tür mit einem ersten, einem zweiten und einem dritten Beschlagteil (11,1,3), bei dem
das erste (11) an dem dritten Beschlagteil (3) verkippbar gehalten ist
und das erste (11) und das zweite Beschlagteil (1) durch Eingriff jeweiliger Verzahnungen verkoppelbar sind und wobei der Beschlag dazu ausgelegt ist, daß wenn das erste (11) und
das zweite (1) Beschlagteil, bei einer Annäherungsbewegung des zweiten Beschlagteils (1) auf das erste (11) und das dritte (3) Beschlagteils zu, auf einander zugeführt und in Anlage gebracht werden, das erste Beschlagteil (11) unabhängig von der Zuführbewegung am dritten Beschlagteil (3) verkippbar ist und durch die Anlage in eine für den Eingriff optimale Kippstellung zu dem zweiten Beschlagteil (1) gekippt und somit selbsttätig ausgerichtet wird.

13. Beschlag nach Anspruch 12, der ausgelegt ist für ein Montageverfahren nach einem der Ansprüche 1-11.

## Claims

1. Method for mounting a fitting of a window or of a door, in which the fitting comprises two sets of teeth which are to be brought into engagement with one another and which are provided on first and second fitting parts (11, 1) to be coupled to one another, the first of the fitting parts (11) is held tiltably on a further, third fitting part (3), the first and second fitting parts (11, 1) to be coupled together are fed towards one another by way of the sets of teeth during an approach movement of the second fitting part (1) towards the first fitting part (11) and towards the third fitting part (3), and thus brought into contact, and the sets of teeth are then brought into engagement with one another, wherein the first fitting part (11) is held tiltably on the third fitting part (3) independently of the feeding movement and, as a result of the contact, is tilted with respect to the second fitting part (1) into an optimum tilting position for the engagement, and thereby automatically aligned.

2. Method according to Claim 1, in which the first, the second and the third fitting parts (11, 1, 3) are constituent parts of a driving rod fitting and together form a releasable and adjustable driving rod coupling.

3. Method according to Claim 1 or 2, in which the first fitting part (11) is influenced in its tiltability by a spring force, wherein, prior to the engagement being established, the neutral tilting position of the first fitting part (11) that is predetermined by the spring force differs from the optimum tilting position for the engagement.

4. Method according to Claim 3, in which a leaf spring (15) is provided between the first and the third fitting parts (11, 3) and presses the first fitting part (11) away from the third fitting part (3).

5. Method according to one of the preceding claims, in which the sets of teeth are formed on lateral faces of the first and the second fitting parts (11, 1) that are situated substantially parallel to the direction of the feeding movement, and have tooth projections and intermediate tooth recesses which are likewise situated substantially parallel to the direction of the feeding movement.

6. Method according to one of the preceding claim, in which the first fitting part (11) is a claw-like, internally toothed tooth block and the second fitting part (1) is an externally toothed rod.

7. Method according to one of the preceding claims, in which the tiltable mounting between the first and the third fitting parts (11, 3) is obtained by a pin/hole connection (9, 10, 12, 13) with a limit stop.

8. Method according to Claims 3 and 7, in which two pin/hole connections (9, 10, 12, 13) are provided and a limit stop of one connection (9, 12) holds the associated pin (12) more deeply in the associated hole (9) than a limit stop holds the other pin (13) in the other hole (10).

9. Method according to Claim 7 or 8, in which the hole or holes (9, 10) have a tapering form and the pin or pins (12, 13) have a complementary tapering form or a head widening.

10. Method according to Claim 8 or 9, in which the pins (12, 13) are situated substantially completely in the respective holes (9, 10) after the engagement has been established.

11. Method according to one of the preceding claims, in which the feeding and engagement-establishing movements are produced mechanically by an automatic assembly machine.

12. Fitting for a window or a door, comprising a first, a second and a third fitting part (11, 1, 3), in which the first fitting part (11) is held tiltably on the third fitting part (3), and the first fitting part (11) and the second fitting part (1) can be coupled together through the engagement of respective sets of teeth, and wherein the fitting is configured such that, when the first fitting part (11) and the second fitting part (1) are fed towards one another during an approach movement of the second fitting part (1) towards the first fitting part (11) and towards the third fitting part (3), and brought into contact, the first fitting part (11) can be tilted on the third fitting part (3) independently of the feeding movement and, as a result of the contact, is tilted with respect to the second fitting part (1) into an optimum tilting position for the engagement, and thereby automatically aligned.

13. Fitting according to Claim 12, which is configured for a mounting method according to one of Claims 1-11.

## Revendications

1. Procédé pour le montage d'une ferrure d'une fenêtre ou d'une porte, dans lequel la ferrure présente, sur un premier élément et un deuxième élément de ferrure (11,1) à coupler ensemble, deux dentures devant être mises en prise l'une avec l'autre,
le premier élément de ferrure (11) est maintenu à l'état basculant, sur un troisième élément de ferrure (3),
le premier et le deuxième élément de ferrure (11, 1) à coupler sont amenés l'un sur l'autre avec les dentures, par un mouvement d'amenée du deuxième élément de ferrure (1) vers le premier élément de ferrure (11) et le troisième élément de ferrure (3), et entrent ainsi en contact, et les dentures entrent ensuite en prise l'une avec l'autre,
le premier élément de ferrure (11) étant maintenu à l'état oscillant sur le troisième élément de ferrure (3), indépendamment du mouvement d'amenée, et basculé par mise en contact dans une position de basculement optimale pour l'enclenchement par rapport au deuxième élément de ferrure (1), et ajusté ainsi automatiquement.

2. Procédé selon la revendication 1, dans lequel le premier élément, le deuxième élément et le troisième élément (11, 1, 3) sont des composants d'une ferrure de tringle de manoeuvre et forment en commun un couplage de tringle de manoeuvre amovible et ajustable.

3. Procédé selon revendication 1 ou 2, dans lequel le premier élément de ferrure (11) est soumis, lors du basculement, à la force d'un ressort, la position de repos en basculement du premier élément de ferrure (11), prédéterminée par la force de ressort, divergeant, avant la réalisation de l'enclenchement, de la position basculée optimale pour la mise en prise.

4. Procédé selon la revendication 3, dans lequel est prévu, entre le premier élément et le troisième élément de ferrure (11, 3), un ressort à lames (15) qui éloigne par pression le premier élément de ferrure (11) du troisième élément de ferrure (3).

5. Procédé selon l'une des revendications précédentes, dans lequel les dentures sont formées sur les faces latérales du premier élément et du deuxième élément de ferrure (11, 1), qui sont sensiblement orientés parallèlement à la direction du mouvement d'amenée, et présentent des saillies dentées et des évidements inter-dentaires, qui sont aussi sensiblement orientés parallèlement à la direction du mouvement d'amenée.

6. Procédé selon l'une des revendications précédentes, dans lequel le premier élément de ferrure (11) est un sabot denté, en forme de griffe à denture interne, et le deuxième élément de ferrure (1) est une tige à denture extérieure.

7. Procédé selon l'une des revendications précédentes, dans lequel le maintien basculant entre le premier et le troisième élément de ferrure (11, 3) est effectué par une liaison à tenons et mortaises (9, 10, 12, 13), avec une butée.

8. Procédé selon les revendications 3 et 7, selon lequel sont prévues deux liaisons tenon-mortaise (9, 10, 12, 13) et une butée de l'un (12) des tenons (9, 12) le retient, dans la mortaise associé (9) plus profondément que ne le fait une butée de l'autre tenon (13) dans l'autre mortaise (10).

9. Procédé selon revendication 7 ou 8, dans lequel la ou les mortaise(s) (9, 10) présente(nt) une forme conique et le ou les tenon(s) (12, 13) présente(nt) une forme conique complémentaire, ou un élargissement de la tête.

10. Procédé selon revendication 8 ou 9, dans lequel, après la réalisation de l'enclenchement, les tenons (12, 13) sont sensiblement complètement placés dans les mortaises concernées (9, 10).

11. Procédé selon l'une des revendications précédentes, dans lequel le mouvement d'amenée et de réalisation de l'enclenchement sont générés mécaniquement par un automate de montage.

12. Ferrure pour une fenêtre ou une porte, avec un premier, un deuxième élément et un troisième élément de ferrure (11, 1, 3), dans laquelle
le premier élément de ferrure (11) est maintenu au troisième élément de ferrure (3) en pouvant être basculé, et
le premier élément de ferrure (11) et le deuxième élément de ferrure (1) peuvent être couplés par enclenchement de dentures respectives, et
la ferrure étant conçue de sorte que, quand le premier élément de ferrure (11) et le deuxième élément de ferrure (1) sont conduits l'un vers l'autre et viennent porter l'un contre l'autre, lors d'un mouvement d'amenée du deuxième élément de ferrure (1) vers le premier élément de ferrure (11) et le troisième élément de ferrure (3), le premier élément de ferrure (11) peut être basculé sur le troisième élément de ferrure (3), indépendamment du mouvement d'amenée, et est basculé par contact dans une position optimale pour l'enclenchement par rapport au deuxième élément de ferrure (1) et est ainsi aligné automatiquement.

13. Ferrure selon la revendication 12, qui est conçue pour un procédé de montage selon l'une des revendications 1 à 11.
